# EUROPÄISCHE PATENTSCHRIFT

(11) **EP 2 521 035 B1**
(45) Veröffentlichungstag und Bekanntmachung des Hinweises auf die Patenterteilung: **21.02.2018**
(21) Anmeldenummer: 11165167.5
(22) Anmeldetag: 06.05.2011
(51) Int. Cl.: G06F 9/50

(54) **Verfahren und Anordnung zur Konfigurierung einer Ressource für eine virtuelle Laufzeitumgebung**
Method and assembly for configuring a resource for a virtual run time environment
Procédé et agencement de configuration d'une ressource pour un environnement de durée de fonctionnement virtuel

(43) Veröffentlichungstag der Anmeldung: 07.11.2012
(73) Patentinhaber: Siemens Aktiengesellschaft, 80333 München (DE)
(72) Erfinder: Niesser, Otto, 90584 Allersberg (DE); Ünver, Halil Caglar, 90402 Nürnberg (DE)

(56) Entgegenhaltungen:
- US-A1- 2002 013 802
- US-A1- 2003 212 884
- US-A1- 2005 198 633
- US-A1- 2009 276 783

## Beschreibung

Die Erfindung betrifft ein Verfahren zur Konfigurierung einer Ressource gemäß dem Oberbegriff des Patentanspruchs 1, und einer Anordnung zur Konfigurierung einer Ressource gemäß dem Oberbegriff des Patentanspruchs 13.

In vielen Anwendungsfällen werden virtuelle Laufzeitumgebungen auf Computern, insbesondere auf Personal-Computern, realisiert, wobei regelmäßig auf ein- und derselben Hardware-Plattform mehrere virtuelle Laufzeitumgebungen parallel betrieben werden können. Durch eine solche Virtualisierung können mehrere und auch unterschiedliche Betriebssysteme parallel zueinander, also zeitgleich, betrieben werden.

Dabei bietet die Virtualisierung den Vorteil, dass die einzelnen virtuellen Laufzeitumgebungen weitgehend voneinander entkoppelt sind, was bedeutet, dass beispielsweise Probleme ("Crashs" o.ä.) in einer ersten Laufzeitumgebung idealer Weise keine negativen Auswirkungen auf die Abarbeitung von Programmen in anderen Laufzeitumgebungen haben.

Eine solche Architektur macht man sich auch in industriellen Automatisierungsanordnungen zu nutze, wobei eine Steuerungsaufgabe o.ä. regelmäßig durch ein echtzeitfähiges Betriebssystem ("RTOS" - Real Time Operation System") und ein darauf ablaufendes Automatisierungsprogramm realisiert wird. Daneben sind häufig in weiteren virtuellen Laufzeitumgebungen andere Betriebssysteme installiert, die oft auch als "GPOS", also als "General Purpose Operation Systems" bezeichnet werden.

Die virtuellen Laufzeitumgebungen werden in der Regel durch eine Verwaltungseinrichtung erzeugt und überwacht, wobei die Verwaltungseinrichtung den einzelnen virtuellen Laufzeitumgebungen die Ressourcen der Hardware-Plattform zuordnet bzw. für einen Teil der Ressourcen stellvertretend für die virtuellen Laufzeitumgebungen den Zugriff auf die Ressourcen vornimmt. Ein solche Verwaltungseinrichtung wird auch oft als "VMM", also als "Virtual Machine Monitor" bezeichnet.

Damit kann gesagt werden, dass die Virtualisierungs-Technologie es erlaubt, virtuelle und reale Ressourcen der Hardware-Plattform aufzuteilen und mehrere "Gast-Betriebssysteme" isoliert auf einer einzigen Hardware-Plattform ablaufen zu lassen. Dadurch kann ein Benutzer beispielsweise ein solches Gast-Betriebssystem starten, stoppen oder neu starten, ohne andere Gast-Betriebssysteme derselben Hardware-Plattform zu beeinflussen. Bei einer Neu-Konfiguration eines Gast-Betriebssystems, also das Neustarten bzw. Neu-Booten, darf dieses Gast-Betriebssystem den Ablauf der anderen virtuellen Laufzeitumgebungen und der darin installierten Betriebssysteme nicht beeinflussen. Eine andere Aufgabe der Verwaltungseinrichtung betrifft das Zuweisen der Ressourcen der Hardware-Plattform in dynamischer Weise zu den einzelnen virtuellen Laufzeitumgebungen und der darin installierten lokalen Betriebssysteme. Dies bedeutet, dass während der Laufzeit der einzelnen Gast-Betriebssysteme die Ressourcen wechselweise den einzelnen Laufzeitumgebungen zugeordnet werden können. Dazu müssen zur Laufzeit Ressourcen hinzugefügt oder entfernt werden ("Device Hot Plug"), Gast-Betriebssysteme gestartet (Launching) oder entfernt werden, und fehlerbehaftete Gast-Betriebssysteme neu gestartet werden ("Recovering", "Restart").

Manche Ressourcen werden den virtuellen Laufzeitumgebungen direkt zugeordnet. Eine Vielzahl anderer Ressourcen werden vielmehr durch die Verwaltungseinrichtung "virtualisiert" und mit eigenen virtuellen HW Ressources den virtuellen Laufzeitumgebungen dargestellt. Ein neues Booten eines Gast-Betriebssystems oder das neue Zuweisen einer solchen Ressource kann dabei durch ein einfaches Neustarten der virtuellen Maschine bzw. virtuellen Laufzeitumgebung bewerkstelligt werden, wobei die dabei zugewiesene virtualisierte Hardware derart bereitgestellt wird, als sei sie gerade erst gestartet. Im Gegensatz dazu gestaltet sich die Situation schwieriger, wenn eine reale Hardware-Ressource zu einem Gast-Betriebssystem zugeordnet ist. In einem solchen Fall ist das Starten, Neu-Starten, Booten oder Wiederherstellen des Gast-Betriebssystems deswegen schwieriger, weil in einem solchen Fall reale Hardware-Ressourcen neu konfiguriert werden müssen, also beispielsweise in einen Startzustand versetzt werden müssen. Die dabei notwendige Neu-Konfigurierung einer Ressource ist immer mit speziellen Verfahrensweisen und Anweisungen verbunden, die je nach Typ der Ressource (Device), deren Hersteller und deren spezieller technischer Ausgestaltung besondere Maßnahmen, Treiber etc. erfordert. Außerdem kann dabei regelmäßig direkter Zugriff auf Register und möglicherweise auf das BIOS der Hardware-Plattform erforderlich sein.

Das dynamische Zuweisen und die Verwaltung von Hardware-Ressourcen in einer solchen virtuellen Umgebung erfordert also eine umfangreiche Programmierung der Verwaltungseinrichtung (Virtual Machine Monitor), wobei diese Programmierung oft auch bei einer Änderung von Hardware-Ressourcen geändert werden muss. Zum anderen bedeutet dies, dass die oft auch zeitaufwändigen Konfigurierungs-Schritte dazu führen, dass die Verwaltungseinrichtung dadurch oft blockiert wird, wobei es vorkommen kann, dass entsprechend weniger Rechenzeit den virtuellen Laufzeitumgebungen zugeordnet werden kann.

Außerdem können während der Konfigurierung oder Neu-Konfigurierung einzelner Hardware-Ressourcen oft andere Anfragen, die von den virtuellen Laufzeitumgebungen an die Verwaltungseinrichtung gesendet werden, nicht oder nicht verzögerungsfrei abgearbeitet werden. Dies betrifft insbesondere den Fall, in dem eines der Gast-Betriebssysteme neu gestartet (Boot-Vorgang) werden muss, weil in einem solchen Fall eine Vielzahl der diesem Gast-Betriebssystem zugeordneten Hardware Ressourcen neu konfiguriert werden müssen. Ein weiteres Problem besteht darin, dass einige der bekannten Hardware-Ressourcen nicht isoliert in einen Startzustand zurückversetzt werden können. Dies bedeutet, dass ein "Reset" für solche einzelnen Ressourcen nicht isoliert möglich ist, ohne andere Ressourcen ebenfalls zurückzusetzen. Eine Zurücksetzung aller Hardware-Ressourcen, also ein "Reset" der kompletten Hardware-Plattform, würde jedoch zu einem Verlust aller virtuellen Laufzeitumgebungen und damit aller Gast-Betriebssysteme führen.

Die Druckschrift US 2009/0276783 A1 - Johnson et al. "Expansion and Contraction of Logical Partitions on Virtualized Hardware" zeigt der Verwaltung von Ressourcen für eine Anzahl virtueller Maschinen durch einen Hypervisor.

Es ist also eine Aufgabe der vorliegenden Erfindung, die Verwaltung von Hardware-Ressourcen einer Hardware-Plattform mit virtuellen Laufzeitumgebungen zu vereinfachen.

Es ist dabei ein wesentlicher Gedanke der erfindungsgemäßen Lösung dieser Aufgabe, dass die Konfigurierung von Ressourcen nicht durch die Verwaltungseinrichtung, also beispielsweise einen "Virtual Machine-Monitor", sondern durch eine separate Konfigurierungseinrichtung durchgeführt wird, welche ihrerseits in einer separaten virtuellen Laufzeitumgebung angeordnet ist. Dazu wird erfindungsgemäß die zu konfigurierende Ressource für die Zeitspanne, in der diese konfiguriert wird, der virtuellen Laufzeitumgebung mit der Konfigurierungseinrichtung zugeordnet, und nach Vollzug der Konfigurierung wieder derjenigen virtuellen Laufzeitumgebung zugeordnet, deren Gast-Betriebssystem Zugriff auf diese Ressource benötigt.

Die Lösung der Aufgabe sieht insbesondere ein Verfahren gemäß Patentanspruch 1 und eine Anordnung gemäß dem Patentanspruch 13 vor.

Dabei wird ein Verfahren zur Konfigurierung einer Ressource für deren Verwendung durch eine erste virtuelle Laufzeitumgebung einer Hardware-Plattform vorgeschlagen, wobei eine Verwaltungseinrichtung für virtuelle Laufzeitumgebungen vorgesehen ist. Dabei wird eine zweite virtuelle Laufzeitumgebung mit einer Konfigurierungseinrichtung vorgesehen, wobei in einem ersten Schritt durch die Verwaltungseinrichtung die Ressource der zweiten Laufzeitumgebung zugeordnet wird, in einem zweiten Schritt die Ressource durch die Konfigurierungseinrichtung konfiguriert wird, und in einem dritten Schritt die konfigurierte Ressource der ersten Laufzeitumgebung zugeordnet wird. Damit geschieht die Konfigurierung weitgehend ohne Beeinflussung des Ablaufs der Verwaltungseinrichtung und anderer virtueller Laufzeitumgebungen, wobei die Verwaltungseinrichtung auch keine Treiber und keine speziellen Einstellungen und Verfahrensweisen für die Konfigurierung der Ressourcen benötigt.

Die Lösung der Aufgabe sieht weiter eine Anordnung zur Konfigurierung einer Ressource für deren Verwendung durch eine erste virtuelle Laufzeitumgebung einer Hardware-Plattform vor, wobei auf der Hardware-Plattform zumindest eine Verwaltungseinrichtung für virtuelle Laufzeitumgebungen installiert ist. Dabei ist auf der Hardware-Plattform zumindest eine zweite virtuelle Laufzeitumgebung mit einer Konfigurierungseinrichtung angeordnet, wobei die Verwaltungseinrichtung zur Zuordnung der zu konfigurierenden Ressource zu der zweiten virtuellen Laufzeitumgebung eingerichtet ist, wobei die Konfigurierungseinrichtung zur Konfigurierung der Ressource eingerichtet ist, und wobei die Verwaltungseinrichtung zur Zuordnung der konfigurierten Ressource zu der ersten virtuellen Laufzeitumgebung nach der Konfigurierung eingerichtet ist. Durch eine solche Anordnung können die durch das erfindungsgemäße Verfahren realisierbaren Vorteile bewirkt werden.

Vorteilhafte Ausgestaltungen des erfindungsgemäßen Verfahrens sind in den abhängigen Patentansprüchen angegeben. Die dabei beschriebenen Merkmale und die damit verknüpften Vorteile gelten sinngemäß auch für die erfindungsgemäße Anordnung. Dabei können einzelne vorteilhafte Ausgestaltungen entweder alleine oder in Kombination miteinander eingesetzt werden.

In einer vorteilhaften Ausgestaltung wird in dem zweiten Schritt einer Treiber-Instanz der zu konfigurierenden Ressource für die Dauer der Konfigurierung anstelle der realen Hardware-Einheit bzw. Hardware-Ressource eine diese Ressource simulierende Hardware-Einheit, also eine virtuelle Hardware-Einheit, zugeordnet. Dies ist insbesondere in den Fällen von Vorteil, in denen ein Zugriff der Treiber-Instanz auf die reale Hardware-Einheit nur eingeschränkt gegeben ist, also beispielsweise einige Register der realen Hardware-Einheit nur lesend und nicht schreibend bearbeitet werden können. Ein anderer vorteilhafter Anwendungsfall besteht dann, wenn die entsprechende reale Hardware-Einheit nicht separat zurückgesetzt werden kann, weil beispielsweise keine separate Reset-Leitung für diese Hardware-Einheit zugegriffen werden kann. Ein weiterer Vorteil besteht darin, dass die reale Hardware-Einheit während der Dauer der Konfigurierung der Treiber-Instanz anderweitig weiter verwendet werden kann, ohne dass deren Betrieb beeinträchtigt oder beendet wird. Vorteilhaft kann nach der Konfigurierung der Treiber-Instanz mittels der virtualisierten Hardware-Einheit der Betriebszustand der realen Hardware-Einheit festgestellt oder ausgelesen werden, wobei die neu konfigurierte Treiber-Einheit dann in einen Betriebszustand versetzt wird, der dem Betriebszustand der realen Hardware-Einheit entspricht, bevor die reale Hardware-Einheit der Treiber-Instanz anstelle der virtuellen Hardware-Einheit zugeordnet wird. Dadurch ist eine Konsistenz zwischen dem logischen Zustand der Treiber-Einheit und dem logischen Zustand der realen Hardware-Einheit gewährleistet.

In einer anderen vorteilhaften Ausgestaltung ist neben der ersten und der zweiten zumindest noch zumindest eine dritte virtuelle Laufzeitumgebung vorgesehen. In den Fällen, in denen eine Ressource von einer dritten Laufzeitumgebung zu einer zweiten Laufzeitumgebung wechseln soll - man spricht auch von "Ressource Swapping" -, wird zuerst durch die Verwaltungseinrichtung die Zuordnung der Ressource zu der dritten Laufzeitumgebung vor der Durchführung des ersten Schritts des Verfahrens gelöst. Dadurch kann die Ressource dann der zweiten Laufzeitumgebung zugeordnet werden.

Vorteilhaft umfasst die Konfigurierung das Versetzen einer der Ressource bzw. der Treiber-Instanz der Ressource zugeordneten Hardware-Einheit in einen vordefinierten Zustand, wobei dieser vorteilhaft ein Start-Zustand ("Init State", "Reset State") ist. Dies hat den Vorteil, dass das Gast-Betriebssystem, welches als nächstes mit dieser Ressource arbeiten soll, mit einem Zustand konfrontiert ist, der einer neu gestarteten realen Maschine entspricht. Insbesondere in den Fällen, in denen die Hardware-Einheit nicht in den Start-Zustand versetzt werden kann, kann alternativ der Zustand der Treiber-Instanz an den der Hardware-Einheit angepasst werden.

In einer vorteilhaften Ausgestaltung ist die Verwaltungseinrichtung derart konfiguriert, dass Rücksetzungsanweisungen der virtuellen Laufzeitumgebungen bzw. der darin angeordneten Gast-Betriebssysteme abgefangen werden, wobei die Rücksetzungsanweisungen die Zurücksetzung von Ressourcen und deren Hardware-Einheiten betreffen. Auf diese Weise wird sichergestellt, dass die Konfigurierungseinrichtung bei der mit einer Zurücksetzung verbundenen neuen Konfigurierung der Ressourcen einbezogen werden kann. Insbesondere kann damit auch verhindert werden, dass eine Ressource oder Hardware-Einheit, die von mehreren virtuellen Laufzeitumgebungen benutzt wird, aus einer der virtuellen Laufzeitumgebungen heraus zurückgesetzt wird, während sie durch eine andere der virtuellen Laufzeitumgebungen noch benutzt wird. Durch die Verwaltungseinrichtung kann bei einer abgefangenen Rücksetzungsanweisung entschieden werden, ob die adressierte Ressource tatsächlich unmittelbar zurückgesetzt wird, oder aber die Anweisung zur Rücksetzung an die Konfigurierungseinrichtung weitergeleitet wird, wobei dann seitens der Konfigurierungseinrichtung entschieden wird, ob und in welcher Weise die betroffene Ressource zurückgesetzt bzw. neu konfiguriert wird.

Gleichfalls können Meldungen, durch die aus einer der virtuellen Laufzeitumgebungen heraus der Zugriff auf eine Ressource angefordert wird, ebenfalls an die Konfigurierungseinrichtung weitergeleitet und dort verarbeitet werden. Zu diesem Zweck kann zwischen der Verwaltungseinrichtung und der Konfigurierungseinrichtung ein Kommunikationskanal bestehen, wodurch es der Konfigurierungseinrichtung möglich wird, der Verwaltungseinrichtung Anweisungen über das Lösen und Zuweisen von Ressourcen zu den anderen virtuellen Laufzeitumgebungen zu geben.

Vorteilhaft können anstelle einzelner Ressourcen auch Listen bzw. Gruppen mit einer Mehrzahl an Ressourcen gebildet und in einem Zug konfiguriert werden. Dadurch kann im Vergleich zur einzelnen Konfigurierung Zeit eingespart werden.

Ausführungsbeispiele des erfindungsgemäßen Verfahrens werden nachfolgend anhand der Zeichnungen erläutert. Sie dienen gleichzeitig der Erläuterung von Ausführungsbeispielen der erfindungsgemäßen Anordnung.

### Dabei zeigen:

- Figur 1: in schematischer Darstellung mögliche Betriebszustände einer Ressource am Beispiel eines Ein- oder Ausgabegerätes, und
- Figur 2: in schematischer Darstellung die Zuordnung von Treiber-Instanzen als Ressourcen zu virtuellen Laufzeitumgebungen beim Wechsel ("Swapping") einer Ressource von einer virtuellen Laufzeitumgebung zu einer anderen virtuellen Laufzeitumgebung.

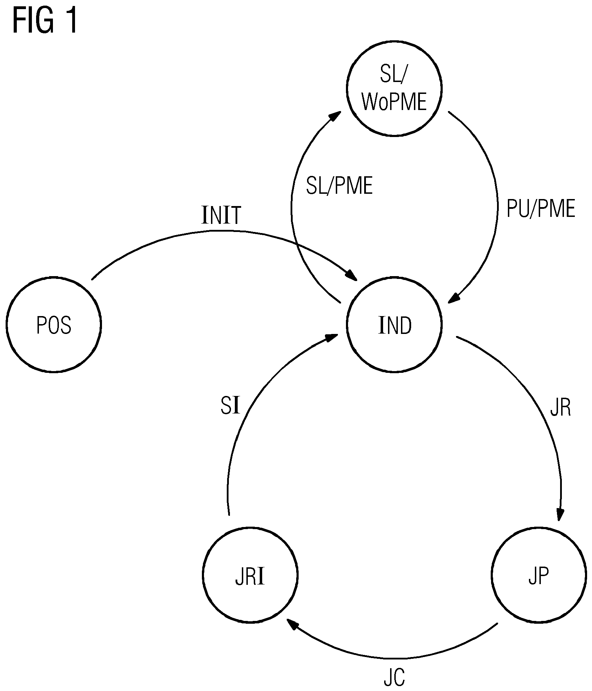

In der Figur 1 sind die repräsentativen Zustände einer Ressource schematisch dargestellt, wobei von einem Startzustand POS (Power-On-State) ausgegangen wird. Nach einer Initialisierungsphase INIT ist die Ressource zum ersten Mal initialisiert, Zustand IND. Sobald die Ressource einen Auftrag empfängt (JR = Job Received), stellt sich der Zustand JP (Job Pending) ein, wobei die Ressource beschäftigt und in der Regel blockiert ist. Nach der Abarbeitung des Auftrags (JC -Job Completed) stellt sich der Zustand JRI ein (JRI - Job Ready-Interrupt). Dies bedeutet, dass ein Treiber dieser Ressource die Nachricht bekommt, dass der Auftrag erledigt wurde. Durch die Bearbeitung (SI - Servicing Interrupt) der "Fertig-Meldung" geht die Ressource wieder in den Zustand IND (Initialized) über. Nach einer Wartezeit kann die Ressource von einer Energieverwaltung (PM - Power Management) die Anweisung SL/PME (Sleep/Power Management Event) bekommen, wodurch die Ressource in den Zustand SL/WoPME (Sleep-Waiting on Power Management Event) versetzt wird. Dies bedeutet, dass die Ressource in einem "Schlafzustand", also einem Energiespar-Zustand ist, während sie auf eine weitere Nachricht des Power Managements wartet. Sobald eine solche Meldung PU/PME (Power Up/Power Management Event) eingeht, wechselt die Ressource wieder in den Zustand IND, so dass sie zur Verarbeitung weiterer Aufträge bereit steht.

Ziel der Konfigurierung einer Ressource ist es im Allgemeinen, die Ressource in den Zustand IND zu bringen, was sowohl einen etwaigen Treiber (Software) der Ressource betrifft, als auch eine Hardware-Einheit, die mit der Ressource verknüpft oder Bestandteil dieser ist. In den Fällen, in denen der Zustand der Hardware-Einheit nicht beeinflussbar ist, ist es das Ziel der Konfigurierung, den Treiber (Software) der Ressource in einen Zustand zu versetzen, der dem Zustand der Hardware-Einheit der Ressource entspricht.

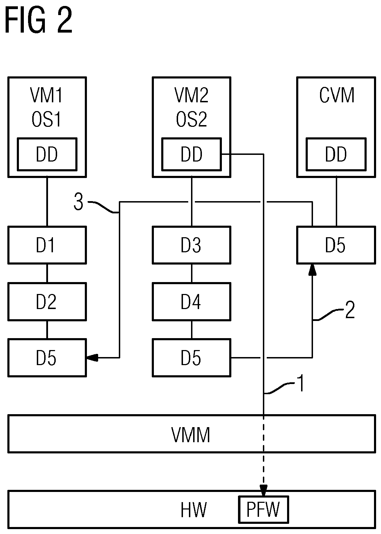

Im Folgenden wird anhand der Figur 2 ein Zurücksetzen und ein Wechsel ("Swapping") einer Ressource D5 (Device 5) von einer virtuellen Laufzeitumgebung VM2 (Virutal Machine 2) mit dem Gast-Betriebssystem OS2 zu einer anderen virtuellen Laufzeitumgebung VM1 mit dem Gast-Betriebssystem OS1 beschrieben. Neben den bereits erwähnten virtuellen Laufzeitumgebungen VM1, VM2 ist noch eine dritte virtuelle Laufzeitumgebung CVM (Configuration Virtual Machine) mit einer Konfigurierungseinrichtung dargestellt. In jeder virtuellen Laufzeitumgebung sind Treiber DD (Device Driver) für den Betrieb von Ressourcen installiert. Die Ressourcen bestehen jeweils aus entsprechenden realen Hardware-Einheiten der Hardware-Plattform HW bzw. virtuellen Hardware-Einheiten der Verwaltungseinrichtung VMM (nicht eigezeichnet). Die Hardware-Einheiten der Hardware-Plattform HW werden entweder direkt durch die Treiber DD der virtuellen Laufzeitumgebungen VM1, VM2, CVM adressiert, oder aber durch eine Verwaltungseinrichtung VMM (Virtual Machine Monitor) in virtualisierter Weise abgebildet, so dass die Zugriffe der Treiber DD durch die Verwaltungseinrichtung VMM abgefangen und verarbeitet werden. Einige der Hardware-Einheiten sind mit einer Hardware-nahen Treiber-Software PFW (Plattform Firmware) verknüpft, was beispielsweise ein BIOS (Basic Input-Output-System) eines Motherboards einer PC-Hardware, einer Grafikkarte oder dgl. sein kann. Für jede virtuelle Laufzeitumgebung VM1, VM2, CVM ist je eine Liste mit den zugeordneten Ressource D1, ..., D5 vorgesehen; die Listen sind im Mittelteil der Figur 2 dargestellt. Die später exemplarisch erwähnte Ressource D5 ist zunächst der virtuellen Laufzeitumgebung VM2 zugeordnet.

Es soll angenommen werden, dass durch das Betriebssystem OS2 eine Rücksetzungsanweisung generiert und an die Hardware-Einheit der Ressource D5 versendet wird; dies ist in der Figur 2 mit dem Pfeil 1 dargestellt. Grund für diese Rücksetzungsanweisung kann beispielsweise sein, dass ein Benutzer die Funktion "Hardware sicher entfernen" für die Ressource D5 aktiviert hat. Die Rücksetzungsanweisung wird durch die Verwaltungseinrichtung VMM abgefangen, ausgewertet und an die Konfigurierungseinrichtung der virtuellen Laufzeitumgebung CVM weitergeleitet. Diese stellt fest, dass die betreffende Ressource noch der virtuellen Laufzeitumgebung VM2 zugeordnet ist und beauftragt daher die Verwaltungseinrichtung VMM mit dem Lösen dieser Beziehung.

Durch die Verwaltungseinrichtung VMM, die auch oft als "Hypervisor" bezeichnet wird, wird dann die Ressource D5 der virtuellen Laufzeitumgebung VM2 entzogen. Dies bedeutet, dass beispielsweise im Fall einer Plug-and-Play-Ressource, also beispielsweise einer PCI-Express Netzwerkkarte, dem Betriebssystem OS2 signalisiert wird, dass diese Ressource D5 "ausgesteckt" wurde. Damit stellt das Betriebssystem OS2 die Benutzung dieser Ressource D5 ein. Danach wird die Ressource D5 von der Ressourcen-Liste der virtuellen Laufzeitumgebung VM2 gestrichen und der Ressourcen-Liste der virtuellen Laufzeitumgebung CVM hinzugefügt, also dieser virtuellen Laufzeitumgebung CVM zugeordnet. Dies ist durch den Pfeil 2 in der Figur 2 dargestellt. Nun beginnt die Konfigurierungseinrichtung, die in der virtuellen Laufzeitumgebung CVM installiert ist, damit, die Ressource D5 in einen Ausgangszustand zu versetzen. Für einen Drucker als Ressource D5 würde das beispielsweise bedeuten, den Speicher mit den anhängigen Druckaufträgen zu löschen, den Papierpfad zu leeren und einen Druckkopf in einen Startzustand zu fahren. Diese Verfahrensschritte, die zu einer Konfigurierung der Ressource D5 notwendig sind, sind in der Konfigurierungseinrichtung als "Konfigurierungs-Informationen" für alle verfügbaren Ressourcen D1, ..., D5 voreingestellt. Zur Abarbeitung dieser Anweisungen bekommt das Betriebssystem der virtuellen Laufzeitumgebung CVM durch die Verwaltungseinrichtung VMM in derselben Weise Arbeitszyklen eines Mikroprozessors und andere Ressourcen zugeteilt, wie das auch bei den anderen virtuellen Laufzeitumgebungen VM1, VM2 der Fall ist. Nach Ausführung der Konfigurierung der Ressource D5 sendet die Konfigurierungseinrichtung an die Verwaltungseinrichtung VMM eine Bestätigungsmeldung, die besagt, dass die Konfigurierung der Ressource D5 abgeschlossen ist und dass der Startzustand wieder hergestellt wurde. Die Ressource D5 wird dann durch die Verwaltungseinrichtung VMM von der Ressourcen-Liste der virtuellen Laufzeitumgebung CVM gestrichen und kann anderweitig verwendet werden. Im vorliegenden Beispiel wird davon ausgegangen, dass das Betriebssystem OS1 die Nutzung der Ressource D5 angefordert hat. Da diese sich in einem Startzustand befindet und somit direkt einsetzbar ist, ordnet die Verwaltungseinrichtung VMM diese Ressource D5 der Ressourcen-Liste der virtuellen Laufzeitumgebung VM1 zu. Dies wird durch den Pfeil 3 symbolisiert. Danach steht die Ressource D5 und steht damit dem Betriebssystem OS1 zur Verfügung.

Während die Neuzuordnung einer PCI-Express Netzwerkkarte ein vergleichsweise einfacher Anwendungsfall ist, der auch noch von gebräuchlichen Verwaltungseinrichtungen selbst und ohne separate Konfigurierungseinrichtung beherrscht werden kann, sind andere Ressourcen weniger einfach zu handhaben. Beispielsweise ist ein "Programmable Interrupt Controller" ("PIC") ein typisches Beispiel für einen Hardware-Baustein einer PC-Architektur, der nicht einfach "resetted" werden kann, ohne den Betrieb aller Betriebssysteme OS1, OS2 zu unterbrechen. Zur Konfigurierung eines solchen PIC nur in Bezug auf eine ausgewählte virtuelle Laufzeitumgebung ist das Durchführen eines speziellen Verfahrens notwendig, welches nicht einfach in einer Verwaltungseinrichtung VMM abgebildet werden kann und zudem, falls es doch durch eine Verwaltungseinrichtung VMM durchgeführt würde, die Verwaltungseinrichtung VMM für eine verhältnismäßig lange Zeitperiode blockieren würde. Soll beispielsweise ein solcher PIC-Baustein nach einem "Absturz" ("Crash") eines der Betriebssysteme OS1, OS2 neu konfiguriert werden, muss die Konfigurierungseinrichtung zunächst feststellen, ob die PIC-Hardware einen diesbezüglichen gespeicherten Interrupt-Request aufweist bzw. ein "Pending Interrupt Servicing Bit" in Bezug auf das betroffene Betriebssystem OS1, OS2 gesetzt ist. Sofern dies der Fall ist, muss die Konfigurierungseinrichtung dieses betroffene "ISR-Bit" löschen, die entsprechenden "Interrupt is in Service"-Stati des PIC zurücksetzen und die verbleibenden Interrupt-Controller-Register rekonfigurieren. An diesen notwendigen Verfahrensschritten ist zu sehen, dass die konfigurierende Einrichtung detaillierte Kenntnisse über die Registerstruktur der verwendeten Hardware-Einheiten und der zugeordneten Treiber-Einheiten haben muss. Diese Kenntnisse können in der Konfigurierungseinrichtung gebündelt sein bzw. von dieser aus einem zentralen Datenspeicher abgerufen werden, so dass die Verwaltungseinrichtung VMM sowohl von dem "Wissen" über das "Wie" der Konfigurierung entlastet ist, als auch von der Durchführung der entsprechenden Verfahrensschritte.

## Patentansprüche

1. Verfahren zur Konfigurierung einer Ressource (D5) für deren Verwendung durch eine erste virtuelle Laufzeitumgebung (VM1) einer Hardware-Plattform (HW),
wobei eine Verwaltungseinrichtung (VMM) für virtuelle Laufzeitumgebungen (VM1, VM2, CVM) vorgesehen ist,
**dadurch gekennzeichnet,**
**dass** eine zweite virtuelle Laufzeitumgebung (CVM) mit einer Konfigurierungseinrichtung vorgesehen wird, und dass
- in einem ersten Schritt durch die Verwaltungseinrichtung (VMM) die Ressource (D5) der zweiten Laufzeitumgebung (CVM) zugeordnet wird,
- in einem zweiten Schritt die Ressource (D5) durch die Konfigurierungseinrichtung konfiguriert wird, und
- in einem dritten Schritt die konfigurierte Ressource (D5) der ersten Laufzeitumgebung (VM1) zugeordnet wird.

2. Verfahren nach Patentanspruch 1,
**dadurch gekennzeichnet,**
**dass** in dem zweiten Schritt einer Treiber-Instanz (DD) der zu konfigurierenden Ressource (D5) vor der Konfigurierung anstelle der realen Hardware-Einheit eine diese Ressource (D5) simulierende Hardware-Einheit zugeordnet wird, wobei nach Abschluss der Konfigurierung der Treiber-Instanz (DD) wieder die reale Hardware-Einheit der Ressource (D5) zugeordnet wird.

3. Verfahren nach einem der vorhergehenden Patentansprüche,
**dadurch gekennzeichnet,**
**dass** neben der ersten (VM1) und der zweiten (CVM) zumindest noch eine dritte virtuelle Laufzeitumgebung (VM2) vorgesehen wird.

4. Verfahren nach Patentanspruch 3,
**dadurch gekennzeichnet,**
**dass** die Ressource (D5) vor der Zuordnung zu der zweiten Laufzeitumgebung (CVM) einer dritten Laufzeitumgebung (VM2) zugeordnet ist, wobei durch die Verwaltungseinrichtung (VMM) diese Zuordnung vor dem ersten Schritt gelöst wird.

5. Verfahren nach einem der vorhergehenden Patentansprüche,
**dadurch gekennzeichnet,**
**dass** die Konfigurierung das Versetzen einer der Ressource (D5) zugeordneten Hardware-Einheit in einen vordefinierten Zustand umfasst.

6. Verfahren nach Patentanspruch 5,
**dadurch gekennzeichnet,**
**dass** als der vordefinierte Zustand ein Start-Zustand (IND) der Hardware-Einheit vorgesehen wird.

7. Verfahren nach einem der vorhergehenden Patentansprüche,
**dadurch gekennzeichnet,**
**dass** die Konfigurierung die Versetzung einer der Ressource (D5) zugeordneten Treiber-Instanz (DD) in einen festgelegten Zustand umfasst.

8. Verfahren nach Patentanspruch 7,
**dadurch gekennzeichnet,**
**dass** der festgelegte Zustand dem Zustand einer Treiber-Instanz (DD) nach einem Neustart der Hardware-Plattform (HW) entspricht.

9. Verfahren nach Patentanspruch 7 oder 8,
**dadurch gekennzeichnet,**
**dass** die Konfigurierung die Feststellung eines Zustandes der Hardware-Einheit der zu konfigurierenden Ressource (D5) umfasst, wobei die Konfigurierung die Versetzung der Treiber-Instanz (DD) der zu konfigurierenden Ressource (D5) in einen Zustand umfasst, der dem Zustand der Hardware-Einheit entspricht.

10. Verfahren nach einem der vorhergehenden Patentansprüche,
**dadurch gekennzeichnet,**
**dass** vor dem ersten Schritt durch die Verwaltungseinrichtung (VMM) zumindest eine Rücksetzungsanweisung abgefangen wird, die von einem Betriebssystem in einer der virtuellen Laufzeitumgebungen (VM1, VM2, CVM), der die zu konfigurierenden Ressource (D5) zugeordnet ist, an die Hardware-Plattform (HW) oder an eine Firmware der Hardware-Plattform (HW) gerichtet ist.

11. Verfahren nach Patentanspruch 10,
**dadurch gekennzeichnet,**
**dass** durch das Abfangen der zumindest einen Rücksetzungsanweisung die Zuordnung der Ressource (D5) zu der zweiten Laufzeitumgebung (CVM) und die Konfigurierung der Ressource (D5) initiiert wird.

12. Verfahren nach einem der vorhergehenden Patentansprüche,
**dadurch gekennzeichnet,**
**dass** als die zu konfigurierende Ressource (D5) eine zusammengefasste Anzahl verschiedener Ressourcen konfiguriert wird.

13. Anordnung zur Konfigurierung einer Ressource (D5) für deren Verwendung durch eine erste virtuelle Laufzeitumgebung (VM1) einer Hardware-Plattform (HW),
wobei auf der Hardware-Plattform (HW) zumindest eine Verwaltungseinrichtung (VMM) für virtuelle Laufzeitumgebungen (VM1, VM2, CVM) installiert ist,
**dadurch gekennzeichnet,**
**dass** auf der Hardware-Plattform (HW) zumindest eine zweite virtuelle Laufzeitumgebung (CVM) mit einer Konfigurierungseinrichtung angeordnet ist, wobei
die Verwaltungseinrichtung (VMM) zur Zuordnung der zu konfigurierenden Ressource (D5) zu der zweiten virtuellen Laufzeitumgebung (CVM) eingerichtet ist,
wobei die Konfigurierungseinrichtung zur Konfigurierung der Ressource (D5) eingerichtet ist, und
wobei die Verwaltungseinrichtung (VMM) zur Zuordnung der konfigurierten Ressource (D5) zu der ersten virtuellen Laufzeitumgebung (VM1) nach der Konfigurierung eingerichtet ist.

## Claims

1. Method for configuring a resource (D5) for the use thereof by a first virtual runtime environment (VM1) of a hardware platform (HW),
a management device (VMM) for virtual runtime environments (VM1, VM2, CVM) being provided,
**characterized**
**in that** a second virtual runtime environment (CVM) with a configuration device is provided, and in that
- in a first step the resource (D5) is assigned to the second runtime environment (CVM) by the management device (VMM),
- in a second step the resource (D5) is configured by the configuration device, and
- in a third step the configured resource (D5) is assigned to the first runtime environment (VM1).

2. Method according to Patent Claim 1,
**characterized**
**in that** in the second step, instead of the real hardware unit, a hardware unit simulating the resource (D5) to be configured is assigned to a driver entity (DD) of said resource (D5) before the configuration, the real hardware unit of the resource (D5) being assigned to the driver entity (DD) again after conclusion of the configuration.

3. Method according to either of the preceding patent claims,
**characterized**
**in that** at least additionally a third virtual runtime environment (VM2) is provided alongside the first (VM1) and the second (CVM) runtime environments.

4. Method according to Patent Claim 3,
**characterized**
**in that** the resource (D5) is assigned to a third runtime environment (VM2) before the assignment to the second runtime environment (CVM), this assignment being canceled by the management device (VMM) before the first step.

5. Method according to any of the preceding patent claims,
**characterized**
**in that** the configuration comprises putting a hardware unit assigned to the resource (D5) into a predefined state.

6. Method according to Patent Claim 5,
**characterized**
**in that** a start state (IND) of the hardware unit is provided as the predefined state.

7. Method according to any of the preceding patent claims,
**characterized**
**in that** the configuration comprises putting a driver entity (DD) assigned to the resource (D5) into a defined state.

8. Method according to Patent Claim 7,
**characterized**
**in that** the defined state corresponds to the state of a driver entity (DD) after a restart of the hardware platform (HW).

9. Method according to Patent Claim 7 or 8,
**characterized**
**in that** the configuration comprises ascertaining a state of the hardware unit of the resource (D5) to be configured, the configuration comprising putting the driver entity (DD) of the resource (D5) to be configured into a state corresponding to the state of the hardware unit.

10. Method according to any of the preceding patent claims,
**characterized**
**in that**, before the first step, the management device (VMM) intercepts at least one reset instruction which is directed from an operation system in one of the virtual runtime environments (VM1, VM2, CVM), to which the resource (D5) to be configured is assigned, to the hardware platform (HW) or to firmware of the hardware platform (HW).

11. Method according to Patent Claim 10,
**characterized**
**in that** the assignment of the resource (D5) to the second runtime environment (CVM) and the configuration of the resource (D5) are initiated by the interception of the at least one reset instruction.

12. Method according to any of the preceding patent claims,
**characterized**
**in that** a combined number of different resources are configured as the resource (D5) to be configured.

13. Arrangement for configuring a resource (D5) for the use thereof by a first virtual runtime environment (VM1) of a hardware platform (HW),
at least one management device (VMM) for virtual runtime environments (VM1, VM2, CVM) being installed on the hardware platform (HW),
**characterized**
**in that** at least one second virtual runtime environment (CVM) with a configuration device is arranged on the hardware platform (HW),
the management device (VMM) being designed to assign the resource (D5) to be configured to the second virtual runtime environment (CVM),
the configuration device being designed to configure the resource (D5), and
the management device (VMM) being designed to assign the configured resource (D5) to the first virtual runtime environment (VM1) after the configuration.

## Revendications

1. Procédé de configuration d'une ressource (D5) pour son utilisation dans un contexte (VM1) virtuel de temps d'exécution d'une plateforme (HW) de matériel,
dans lequel un dispositif (VMM) de gestion de contextes (VM1, VM2, CVM) virtuels de temps d'exécution est prévu, **caractérisé**
**en ce que** l'on prévoit un deuxième contexte (CVM) virtuel de temps d'exécution par un dispositif de configuration et en ce que
- dans un premier stade, on affecte, par le dispositif (VMM) de gestion, la ressource (D5) au deuxième contexte (CVM) de temps d'exécution,
- dans un deuxième stade, on configure la ressource (D5) par le dispositif de configuration et
- dans un troisième stade, on affecte la ressource (D5) configurée au premier contexte (VM1) de temps d'exécution.

2. Procédé suivant la revendication 1,
**caractérisé**
**en ce que** dans le deuxième stade, on affecte à une instance (DD) pilote de la ressource (D5) à configurer avant la configuration, au lieu de l'unité de matériel réelle, une unité de matériel simulant cette ressource (D5), dans lequel, après la fin de la configuration, on réaffecte, à l'instance (DD) pilote, l'unité de matériel réelle de la ressource (D5).

3. Procédé suivant l'une des revendications précédentes,
**caractérisé**
**en ce qu'**outre le premier (VM1) et le deuxième (CVM), on prévoit au moins encore un troisième contexte (VM2) virtuel de temps d'exécution.

4. Procédé suivant la revendication 3,
**caractérisé**
**en ce que** la ressource (D5) est affectée avant l'affectation au deuxième contexte (CVM) de temps d'exécution à un troisième contexte (VM2) de temps d'exécution, dans lequel cette affectation est défaite, avant le premier stade, par le dispositif (VMM) de gestion.

5. Procédé suivant l'une des revendications précédentes,
**caractérisé**
**en ce que** la configuration comprend la mise d'une unité de matériel affectée à la ressource (D5) dans un état défini à l'avance.

6. Procédé suivant la revendication 5,
**caractérisé**
**en ce que** l'on prévoit, comme état défini à l'avance, un état (IND) de lancement de l'unité de matériel.

7. Procédé suivant l'une des revendications précédentes,
**caractérisé**
**en ce que** la configuration comprend la mise d'une instance (DD) pilote, affectée à la ressource (D5), dans un état fixé.

8. Procédé suivant la revendication 7,
**caractérisé**
**en ce que** l'état fixé correspond l'état d'une instance (DD) pilote après un relancement de la plateforme (HW) de matériel.

9. Procédé suivant la revendication 7 ou 8,
**caractérisé**
**en ce que** la configuration comprend la fixation d'un état de l'unité de matériel de la ressource (D5) à configurer, la configuration correspondant à la mise de l'instance (DD) pilote de la ressource (D5) à configurer dans un état correspondant à l'état de l'unité de matériel.

10. Procédé suivant l'une des revendications précédentes,
**caractérisé**
**en ce qu'**avant le premier stade, il est intercepté, par le dispositif (VMM) de gestion, au moins une instruction de remise à l'état initial, qui est envoyée par un système d'exploitation dans l'un des contextes (VM1, VM2, CVM) virtuels de temps d'exécution, qui est affecté à la ressource (D5) configurée, à la plateforme (HW) de matériel ou à une microprogrammation de la plateforme (HW) de matériel.

11. Procédé suivant la revendication 10,
**caractérisé**
**en ce qu'**il est initié, par l'interception de la au moins une instruction de remise à l'état initial, l'affectation de la ressource (D5) au deuxième contexte (CVM) de temps d'exécution et la configuration de la ressource (D5).

12. Procédé suivant l'une des revendications précédentes,
**caractérisé**
**en ce que** l'on configure, comme ressource (D5) à configurer, un nombre regroupé de diverses ressources.

13. Agencement de configuration d'une ressource (D5) pour son utilisation dans un premier contexte (VM1) virtuel de temps d'exécution d'une plateforme (HW) de matériel,
dans lequel on installe sur la plateforme (HW) de matériel au moins un dispositif (VMM) de gestion de contextes (VM1, VM2, CVM) virtuels de temps d'exécution,
**caractérisé**
**en ce que** l'on dispose sur la plateforme (HW) de matériel au moins un deuxième contexte (CVM) virtuel de temps d'exécution par un dispositif de configuration, dans lequel le dispositif (VM) de gestion est conçu pour affecter la ressource (D5) à configurer au deuxième contexte (CVM) virtuel de temps d'exécution,
dans lequel le dispositif de configuration est conçu pour configurer la ressource (D5) et
dans lequel le dispositif (VMM) de gestion est conçu pour affecter la ressource (D5) configurée au premier contexte (VM1) virtuel de temps d'exécution suivant la configuration.
